# FASCICULE DE BREVET EUROPEEN

(11) **EP 3 812 087 B1**
(45) Date de publication et mention de la délivrance du brevet: **10.07.2024**
(21) Numéro de dépôt: 20203084.7
(22) Date de dépôt: 21.10.2020
(51) Int. Cl.: B23P 17/00, B23K 20/02, F04D 29/28, B33Y 10/00, B33Y 80/00, B23P 15/00, F04D 29/02, F04D 29/22

(54) **PROCÉDÉ DE FABRICATION DE PIÈCES MÉTALLIQUES DE FORMES COMPLEXES PAR SOUDAGE-DIFFUSION**
VERFAHREN ZUR HERSTELLUNG VON METALLTEILEN MIT KOMPLEXEN FORMEN DURCH DIFFUSIONSSCHWEISSEN
METHOD FOR MANUFACTURING METAL PARTS WITH COMPLEX SHAPES BY DIFFUSION WELDING

(30) Priorité: 25.10.2019 FR 1911984
(43) Date de publication de la demande: 28.04.2021
(73) Titulaire: Commissariat à l'énergie atomique et aux énergies alternatives, 75015 Paris (FR)
(72) Inventeur: RIGAL, Emmanuel, 38054 GRENOBLE (FR); CHOMETTE, Sébastien, 38054 GRENOBLE (FR); VIDOTTO, Fabien, 38054 GRENOBLE (FR); LEIBOLD, Jean-Marc, 38054 GRENOBLE (FR)
(74) Mandataire: Cabinet Nony

(56) Documents cités:
- US-A- 3 670 397
- US-A1- 2002 175 265
- US-A1- 2017 189 966
- US-A1- 2018 207 924
- ANONYMOUS: "Perfecting Diffusion Bonding | ManufacturingTomorrow", 12 April 2018 (2018-04-12), XP055710835, Retrieved from the Internet <URL:https://www.manufacturingtomorrow.com/article/2018/11/perfecting-diffusion-bonding-/12593> [retrieved on 20200701]

## Description

### Domaine technique

La présente invention concerne le domaine de la fabrication des pièces métalliques de formes complexes.

Par « pièce métallique de forme complexe », une pièce métallique dont la géométrie la rend délicate voire impossible et/ou coûteuse à partir des techniques usuelles de fabrication (usinage). Une telle pièce peut regrouper des contours géométriques compliqués ou des accès difficiles voire impossibles. Elle peut être réalisable par fonderie mais au prix d'une qualité moindre.

### Technique antérieure

Lorsqu'on souhaite réaliser une pièce métallique, l'usinage à partir d'une ébauche forgée ou coulée de forme simple est utilisé quand cela est possible, c'est-à-dire quand la forme/géométrie de la pièce est suffisamment simple pour le permettre.

L'accessibilité des zones creuses de pièces aux outils d'usinage limite les géométries possibles.

Certaines techniques de fonderie, notamment le moulage à cire perdue ou au sable, permettent l'obtention de pièces de formes complexes et sont très utilisées. Elles consistent à couler un alliage liquide dans un moule réalisé dans un matériau à usage unique que l'on peut facilement éliminer.

Cependant, elles répondent difficilement aux cas les plus exigeants en termes de qualité de matériau. De nombreux alliages présentent en effet des hétérogénéités et défauts à l'état coulé (ségrégations, retassures, soufflures, inclusions non métalliques grossières) qui sont absents ou très réduits dans les matériaux forgés.

En outre, la précision dimensionnelle et l'état de surface (rugosité) requis sont difficiles à atteindre par cette voie à cause des phénomènes de retrait à la solidification et d'interaction avec le matériau de moulage.

On utilise parfois le soudage par fusion (TIG ou autre) en tant que technique d'assemblage d'éléments réalisés par usinage pour fabriquer des pièces métalliques de géométrie complexe, mais cela se fait au détriment de la précision dimensionnelle et du coût, en particulier le coût généré par le contrôle des soudures.

Enfin, l'utilisation de la métallurgie des poudres selon un procédé de Compression Isostatique à Chaud (CIC) pallie une partie des inconvénients cités ci-dessus.

Un tel procédé CIC, notamment décrit dans la publication [1] comprend les étapes successives, comme suit:
Etape a/ : on fixe à l'intérieur d'une enveloppe métallique, appelée conteneur, des pièces appelées noyaux. Le conteneur a une forme suffisamment simple pour être réalisé aisément, par exemple par chaudronnerie à l'aide de tôles par exemple en acier. Les noyaux sont généralement en acier doux ou en tout autre alliage moins noble que l'alliage constitutif de la pièce désirée (on appellera ce dernier le matériau noble ; il s'agit d'acier inoxydable, d'alliage de nickel haute température, de superalliage, d'alliage de titane...)
Etape b/ : on soude un couvercle sur le conteneur.
Etape c/ : on remplit ensuite les interstices entre les noyaux avec une poudre métallique de l'alliage noble désiré. La poudre est obtenue par atomisation au gaz, par électrode tournante ou tout autre procédé permettant d'obtenir des particules approximativement sphériques, denses et de bonne pureté. Le remplissage est habituellement réalisé via un ou plusieurs tubes de remplissage soudés sur le conteneur.
Etape d/ : on dégaze la poudre, généralement en raccordant les tubes de remplissage ou d'autres tubes similaires à une pompe à vide.
Etape e/ : on ferme le conteneur en rendant étanches les tubes par écrasement et soudage. Cette opération s'appelle le queusotage.
Etape f/ : on soumet le conteneur étanche à un cycle de compression isostatique à chaud. Celui-ci consiste en un traitement thermique sous forte pression de gaz en dessous de la température de fusion des matériaux utilisés. Sous l'effet de la pression, typiquement de 500 à 2000bar, et de la température, typiquement de 500 à 1500°C, le conteneur se déforme et transmet la pression et la chaleur à la poudre d'alliage noble qui est alors intégralement densifiée.
Etape g/ : après dépressurisation et refroidissement, on élimine le conteneur, généralement en totalité, et les noyaux.
   Cette élimination peut se faire éventuellement par usinage mécanique pour les parties facilement accessibles, et par dissolution chimique sélective pour les parties inaccessibles. La technique de dissolution chimique consiste à plonger la pièce dans un bain chimique constitué d'acides qui dissout le matériau de noyau et éventuellement le conteneur, sans attaquer le matériau noble. Les acides peuvent être de l'acide nitrique, chlorhydrique, sulfurique... Un potentiel électrique peut être appliqué pour accélérer la dissolution.
Etape h/ (facultative): on applique à la pièce obtenue un traitement thermique supplémentaire destiné à lui conférer les propriétés d'usage voulues.

Un tel procédé CIC présente l'avantage de permettre l'obtention de pièces complexes, dont le matériau a une qualité comparable à celle d'un matériau forgé et qui est monolithique, i.e. sans soudure.

L'état de surface obtenu dépend de l'état de surface des noyaux, de l'indentation des noyaux par la poudre, de l'interaction chimique entre les deux et des conditions de dissolution. Cependant, ce procédé présente encore plusieurs inconvénients majeurs que l'on peut résumer comme suit.

Tout d'abord, les noyaux se déforment pendant l'étape f/ d'application du cycle CIC, car la densité de la poudre dépasse rarement 70% de la masse volumique du matériau massif. En effet, la densification à 100% ne peut pas se faire sans déformation des noyaux. Cela oblige à un travail important de conception pour définir quelle forme initiale précise il faut donner aux noyaux et comment les positionner pour obtenir la forme finale désirée.

Ensuite, en cas de remplissage inégal de la poudre, dû par exemple à une ségrégation granulométrique ou à l'existence d'interstices trop fins, certaines parties de la pièce finale peuvent sortir des spécifications dimensionnelles.

En outre, comme le matériau de noyau est différent du matériau constitutif de la pièce, il se développe lors du refroidissement des contraintes internes dues à la contraction différentielle qui peuvent mener à des déformations lors de la dissolution chimique ou lors de traitements thermiques ultérieurs. Celles-ci rendent difficile le contrôle (la maîtrise) de la géométrie. Enfin, la dissolution des noyaux est un processus lent qui génère des délais importants. US 3670397 A décrit un procédé de fabrication d'un élément métallique stratifié comprenant la fabrication d'une pluralité de lamelles métalliques qui sont ensuite empilées les unes aux autres selon la forme dudit élément. La pile de lamelles est placée dans un conteneur métallique avec des moyens de retenue de formes correspondantes à la pile de lamelles. L'ensemble est ensuite soudé par soudage-diffusion et les moyens de retenue sont retirés mécaniquement.

US 2002/175265 A1 décrit un procédé de fabrication d'un moule comprenant des canaux de refroidissement. Le procédé comprend l'empilement d'une pluralité de plaques dont certaines présentent une ou des rainures et ou un ou des trous, la pile obtenue étant agencée de sorte que les rainures et les trous prennent la forme des canaux de refroidissement. La pile est ensuite soudée par soudage-diffusion.

Ainsi, il existe donc un besoin d'améliorer les procédés existants de fabrication de pièces métalliques, notamment afin de pouvoir maîtriser de manière plus simple et fiable des déformations et contraintes et d'obtenir un meilleur état de surface après élimination des noyaux, tout en gardant la possibilité de fabriquer des formes/géométries complexes avec une qualité de matériau meilleure que celle obtenue par une technique de fonderie.

Le but de l'invention est de répondre au moins en partie à ce besoin.

### Exposé de l'invention

Pour ce faire, l'invention concerne, sous l'un de ses aspects, un procédé de fabrication d'une pièce métallique de forme complexe conformément à la revendication 1.

Selon un premier mode de réalisation avantageux, les morceaux du moule négatif sont en un seul matériau dont le coefficient de dilatation moyen entre la température ambiante et la température de soudage est proche de celui du matériau noble des morceaux de l'ébauche ou de la pièce, de préférence avec une différence au plus entre 1 et 3 10⁻⁶K⁻¹. Selon ce premier mode, les morceaux de l'ébauche ou de la forme souhaitée peuvent être en alliage austénitique inoxydable (acier, alliage de nickel) ou en alliage de titane, tandis que ceux du moule négatif peuvent être en alliage apte à être éliminé par dissolution chimique à l'aide d'une solution sans effet sur les morceaux de l'ébauche ou de la forme souhaitée. Par « sans effet », on comprend que la solution n'attaque pas chimiquement les morceaux de l'ébauche ou de la forme souhaitée.

Selon un deuxième mode de réalisation avantageux, les morceaux du moule négatif sont en au moins deux matériaux, dont l'un est apte à être éliminé par dissolution chimique à l'aide d'une solution sans effet sur les morceaux de l'ébauche ou de la forme souhaitée, et l'autre est apte à être éliminé par une autre technique que la dissolution chimique, de préférence par extraction mécanique ou usinage, et choisis de telle sorte que le comportement en dilatation thermique du moule négatif entre la température ambiante et la température de soudage est proche de celui du matériau noble des morceaux de l'ébauche ou de la forme souhaitée. Selon ce deuxième mode, les parties des morceaux du moule négatif en contact direct avec les morceaux de l'ébauche ou de la forme souhaitée peuvent être en acier doux et les autres parties du moule négatif peuvent être en alliage inoxydable.

Dans ces deux modes de réalisation, selon la géométrie du moule négatif, il peut arriver que l'extraction mécanique soit suffisante pour l'éliminer, sans recours à la dissolution chimique. Néanmoins le procédé selon la revendication 1 comprend une attaque chimique sélective. Un mode de réalisation ne comprenant qu'une extraction mécanique n'est donc pas couvert par les revendications 1 à 14.

L'étape iv/ peut être réalisée soit par pressage uniaxial à chaud, les interfaces entre les morceaux empilés étant parallèles entre elles et perpendiculaires à la direction d'application de la force de soudage, soit par compression isostatique à chaud (CIC). La CIC peut être préférée car elle présente de meilleures performances de soudage, et laisse la possibilité d'une orientation quelconque des interfaces entre les morceaux.

Selon une caractéristique avantageuse, au moins une partie du conteneur mis en oeuvre pour la CIC forme une partie de la pièce obtenue à l'issue de l'étape v/.

Avantageusement, on peut prévoir, avant l'étape iii/,
- une étape de nettoyage des morceaux de l'ébauche ou de la forme souhaitée et de ceux du moule négatif et/ou,
- une étape d'application d'un anti diffusant sur tout ou partie des morceaux du moule négatif.

Avantageusement encore, le procédé peut comprendre, après l'étape v/, une étape de traitement thermique de la pièce obtenue.

Avantageusement encore, le procédé peut comprendre, après l'étape v/, une étape d'usinage de finition de la pièce obtenue.

Les morceaux de l'ébauche ou de la forme souhaitée et de ceux du moule négatif peuvent être des blocs, des plaques, des barres, des tubes, des lames extraites de tôles ou une combinaison de ceux-ci.

Les morceaux de l'ébauche ou de la forme souhaitée et de ceux du moule négatif peuvent être obtenus par usinage à partir de matière métallique, par découpe, par fabrication additive ou par une combinaison de ces techniques.

Ainsi, l'invention consiste essentiellement en un procédé de fabrication selon lequel initialement on réalise par segmentation l'ébauche ou la forme souhaitée de la pièce métallique finale en plusieurs morceaux à empiler, l'empilement étant emboité sans jeux significatifs avec un empilement de morceaux qui constituent le moule négatif par segmentation, en formant ainsi un ensemble dense auquel on applique un soudage diffusion. Par « jeux significatifs », on comprend que l'homme de l'art veille à ce que les jeux aux interfaces des empilements et des morceaux confèrent à l'ensemble résultant des empilements et de l'emboitement une densité telle qu'il est possible de le souder par diffusion sans déformation notable. Pour garantir la densité de l'ensemble avec des vides limités aux jeux entre les morceaux et empêcher les déplacements des morceaux, il peut être utile de prévoir des emboîtements entre les morceaux eux-mêmes, la mise en oeuvre de piges de centrage ou de tout autre moyen adapté.

Autrement dit, la pièce finale que l'on souhaite obtenir est, au préalable, réalisée par division en morceaux de géométrie facile à obtenir par des techniques classiques de découpe ou usinage. Il peut être avantageux à ce stade d'agrandir la géométrie de la pièce finale à sa périphérie de sorte que son contour a une géométrie s'inscrivant facilement dans un conteneur pour la mise en oeuvre d'un cycle CIC qui présente une géométrie simple, telle qu'un parallélépipède, un cylindre, un cône ou autre.

Le moule négatif de la pièce est également réalisé par division en morceaux de géométrie facile à obtenir par des techniques classiques de découpe ou usinage. La conception d'un négatif conforme à l'invention est rendue simple par rapport à l'état de l'art: en effet, comme le choix du soudage diffusion permet d'éviter les grandes déformations inhérentes à la densification des poudres, la géométrie du négatif est connue dès le départ comme étant la contre-forme de la pièce désirée et donc il n'y a pas lieu de chercher à compenser une plastification du négatif.

Puis, le procédé consiste à souder par diffusion soit par une technique de soudage par pression uniaxiale, l'ensemble constitué des empilements et emboîtements de tous les morceaux. Une partie des morceaux constitutifs du négatif peuvent être revêtus d'un anti-diffusant de façon à éviter le soudage par diffusion de ces morceaux.

Dans le cas du soudage diffusion uniaxial, l'ensemble de morceaux empilés et emboités, de préférence nettoyés, est placé dans une presse équipée d'un four et un cycle en force et température est appliqué. Ce cycle comprend une montée en force et en température, un palier et une descente. La force dépend de la taille de la pièce et des matériaux qui la constituent. La température dépend de la nature des matériaux. Dans l'ensemble, toutes les interfaces essentiellement perpendiculaires à la direction d'application de la force sont soudées.

Dans le cas de la compression isostatique à chaud (CIC), l'ensemble, de préférence nettoyé est placé dans un conteneur, un couvercle est soudé sur le conteneur, l'empilement est dégazé et le conteneur est rendu étanche, comme usuellement. Le conteneur est placé dans une enceinte de CIC et un cycle en pression et température est appliqué. Ce cycle comprend une pressurisation et un chauffage, un palier et une descente. Le temps de palier dépend de la taille de la pièce et des matériaux qui la constituent. La température dépend de la nature des matériaux. La pression est généralement de 500 à 1500bar. Toutes les interfaces sont soudées, à l'exception de celles formées par les surfaces revêtues d'anti-diffusant. Pendant le soudage diffusion, la déformation est limitée à l'élimination des jeux et au différentiel de contraction thermique: il n'y a donc pas de déformation notable du négatif ni de la pièce désirée.

Une fois le soudage diffusion réalisé, on procède à l'élimination du négatif. Pour ce faire, on peut d'abord effectuer une étape destinée à ébaucher la forme finale de la pièce désirée. Cette étape peut consister en :
- un usinage par fraisage ou tournage de l'extérieur pour éliminer tout ou partie du conteneur, réduire le volume du négatif à éliminer par attaque chimique sélective ;
- une extraction mécanique des morceaux du négatif préalablement revêtus d'anti diffusant.

Dans un mode de réalisation qui n'est pas couvert par les revendications 1 à 14, cela peut concerner l'ensemble du négatif. Selon l'invention, on immerge la pièce dans un bain chimique comme usuellement pour dissoudre les parties restantes du négatif qui sont en contact avec le matériau noble de la pièce. Lors de cette opération, les éventuelles parties du négatif non attaquables par le bain sont libérées et extraites.

Pendant cette étape, la déformation de la pièce désirée sous l'effet de la libération des contraintes résiduelles est faible grâce au choix du ou des matériau(x) de négatif. En outre, comme il n'y a pas de phénomènes d'indentation du négatif par les particules de poudre, l'état de surface de la pièce désirée est meilleur.

La pièce finale est constituée de l'ensemble des morceaux du matériau noble soudés entre eux par diffusion. Ces morceaux étant obtenus à partir de matière corroyée, leur qualité est meilleure que celle de la matière coulée et comparable à celle de la poudre compactée. Le soudage par diffusion est une technique d'assemblage très performante quand il est correctement mis en oeuvre, c'est-à-dire que la préparation de surface et les conditions de soudage sont correctement choisis. Il est connu que les joints soudés diffusés peuvent être aussi résistants que le matériau de base.

L'empilement de la pièce étant dense, il n'y a pas de déformation associée au soudage autre que les microdéformations permettant l'élimination des jeux et pores dans les interfaces. En outre, la conception correcte du négatif (choix du ou des matériaux, de leurs proportions et de leur répartition) permet de diminuer les contraintes internes issues de la dilatation différentielle et les déformations associées.

L'invention concerne également l'application du procédé de fabrication décrit précédemment pour réaliser des rouets de pompe, des moules de fabrication, des parties d'outils conformément à la revendication 14.

D'autres avantages et caractéristiques de l'invention ressortiront mieux à la lecture de la description détaillée d'exemples de mise en oeuvre de l'invention faite à titre illustratif et non limitatif en référence aux figures suivantes. L'objet de l'invention est défini par les revendications 1 à 14.

### Brève description des dessins

[Fig 1] est une vue en perspective d'un exemple de rouet d'une pompe obtenu conformément au procédé de fabrication selon l'invention.
[Fig 2] est une autre vue en perspective de l'exemple de rouet selon la figure 1.
[Fig 3] est une vue en coupe longitudinale d'un ensemble réalisé par empilement et emboîtement de morceaux du rouet à obtenir et son moule négatif selon un premier mode de réalisation du procédé de l'invention.
[Fig 4] est une vue en coupe transversale de l'ensemble selon la figure 3, au niveau d'une couche des empilements.
[Fig 5] est une vue en coupe transversale d'un ensemble par empilement et emboîtement de morceaux du rouet à obtenir et son moule négatif selon un deuxième mode de réalisation du procédé de l'invention, au niveau d'une couche des empilements.

### Description détaillée

On décrit deux exemples selon deux modes de réalisation distincts du procédé de fabrication d'un rouet de pompe selon l'invention.

Le rouet de pompe, globalement désigné par la référence 1, que l'on souhaite obtenir est en acier inoxydable de diamètre extérieur égal à 350mm. Cet acier a un coefficient de dilatation thermique moyen entre 20 et 1000°C de 19*10⁻⁶K⁻¹.

Le rouet illustré comprend un nombre de cinq veines de fluide 10, 11, 12, 13, 14, 15.

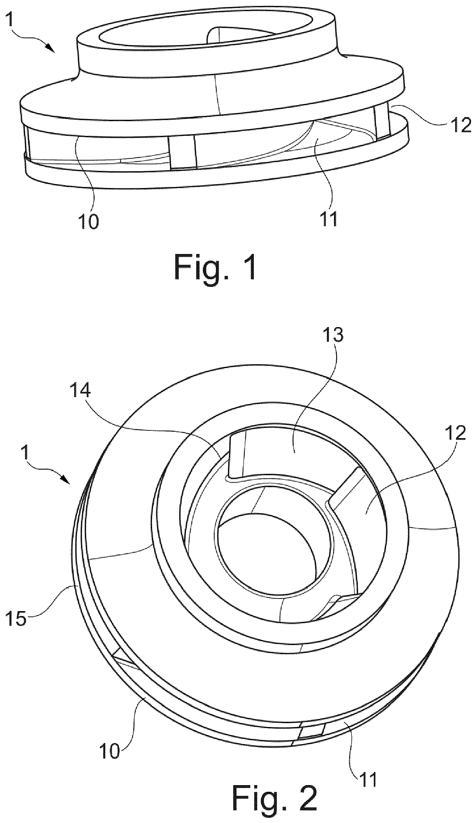

Comme visible sur les figures 1 et 2, les formes complexes des veines 10 à 15 sont difficilement réalisables voire irréalisables en fonction des outils disponibles, par usinage classique à partir d'un bloc métallique massif.

### Exemple 1 :

A l'aide d'un fichier de conception assistée par ordinateur (CAO) du rouet 1 à obtenir, on réalise un découpage par tranche de cette pièce en un nombre de dix-sept couches 1.1 à 1.17 à faces parallèles, toutes de la même épaisseur dans cet exemple. Chaque couche contient un ou plusieurs morceaux et elle est indexée par rapport à ses voisines par des pions de centrage ou des emboîtements, de façon à ce que la rotation d'une couche par rapport aux autres ne soit pas possible. Chaque morceau est ensuite usiné à partir de tôles.

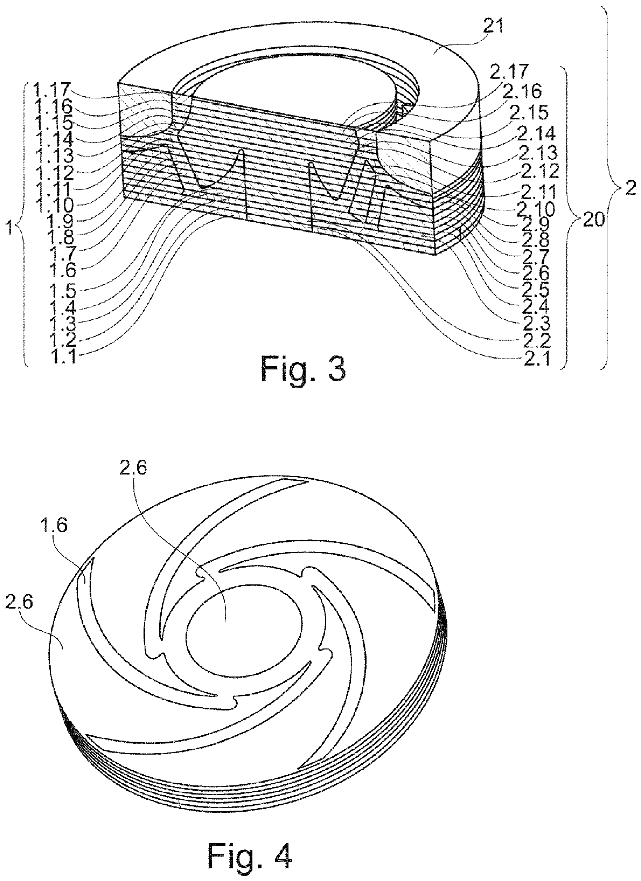

On définit à l'aide du fichier CAO un moule négatif 2 du rouet, auquel on impose une forme extérieure telle que l'ensemble résultant constitué du rouet 1 et de son négatif 2 occupe un cylindre plein comme cela ressort de la figure 3.

Comme visible sur les figures 3 et 4, le négatif 2 est constitué d'une partie 20 complétant l'intérieur du rouet 1 et d'une partie 21 épaisse qui coiffe le rouet 1.

La partie 20 est réalisée par une série de couches 2.1 à 2.17, du même nombre et chacune de même épaisseur que celles définies pour le rouet final 1 dans cet exemple.

Les morceaux du négatif sont dimensionnés de façon à rendre possible l'empilement et l'emboitement avec les morceaux de la pièce finale. Ainsi, la partie 21 est un morceau en un seul tenant tandis que chaque couche 2.1 à 2.17 est composée d'un ou plusieurs morceaux qui s'emboîtent individuellement dans les couches 1.1 à 1.17 du rouet final 1.

Le négatif 2 est usiné à partir de tôles et/ou de barres en nickel, matériau dont le coefficient de dilatation thermique moyen entre 20 et 1000°C est 17*10⁻⁶K⁻¹.

Une fois les morceaux de chaque couche du rouet 1 et du négatif 2 réalisés, ils sont nettoyés par tout moyen approprié (trempage, jets, ultrasons..) à l'aide de détergents, solvants...de même qu'un conteneur en acier inoxydable fabriqué au préalable par chaudronnerie.

Les morceaux sont ensuite emboîtés couche par couche à l'intérieur du conteneur, sur lequel est soudé par procédé TIG un couvercle équipé d'un tube soudé. Le tube est raccordé à une pompe à vide pour l'opération de dégazage avant d'être écrasé à l'aide d'une pince, coupé et rendu étanche par soudage.

Le conteneur est alors soumis à un cycle de CIC comprenant un chauffage à 1150°C à une vitesse de 350°C/h et une pressurisation concomitante à 1000bar, suivie d'un palier de 3h et d'un refroidissement et dépressurisation jusqu'aux conditions ambiantes. Les déformations pendant le cycle de CIC sont très faibles car limitées aux jeux d'empilement. Les contraintes résiduelles après refroidissement sont très faibles étant donné que les valeurs des coefficients de dilatation thermique des deux matériaux (acier inoxydable, nickel) sont très proches. Une fois le cycle CIC réalisé, le conteneur CIC est éliminé par une opération de tournage mécanique et le négatif 2 en nickel est éliminé par dissolution chimique dans un bain d'acide nitrique. Durant ces opérations d'élimination, la déformation du rouet 1 due au relâchement de contraintes résiduelles est négligeable.

Le rouet final 1 en acier inoxydable à cinq veines 10 à 15 est ainsi obtenu.

### Exemple 2 :

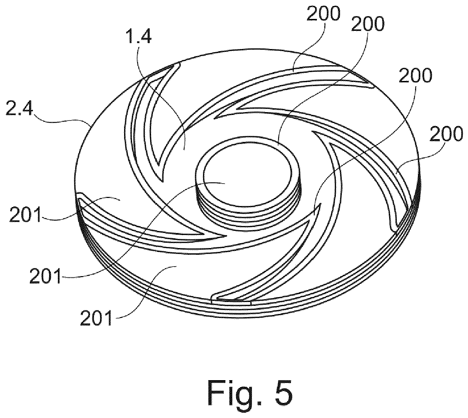

Cet exemple est identique à l'exemple 1 à l'exception du fait que l'on utilise un moule négatif 2 dont chaque couche 2.10 à 2.17 est en matériau composite comme illustré sur la figure 5. On précise que sur cette figure 5, les frontières (interfaces) entre les morceaux ne sont pas montrées.

Ainsi, pour chaque couche 2.10 à 2.17 du négatif 2, la partie 200 au contact du rouet 1, sur une épaisseur de 3mm, est en acier doux, dont le coefficient de dilatation thermique moyen entre 20 et 1000°C est 14*10⁻⁶K⁻¹ tandis que la partie principale 201 du négatif 2, non en contact avec le rouet 1, est dans le même acier inoxydable que celui du rouet 1.

Les contraintes résiduelles après refroidissement sont très faibles étant donnée la faible quantité d'acier doux présente.

Le conteneur CIC est éliminé par une opération de tournage mécanique. Les parties 200 en acier doux du négatif 2 sont éliminées par dissolution chimique en bain d'acide nitrique et les parties 201 en acier inoxydable sont éliminées par simple extraction mécanique. Cette extraction est possible en définissant judicieusement la géométrie des parties en acier doux, de façon à ce que l'espace libéré par la dissolution chimique des parties 200 soit adapté. D'autres variantes et améliorations peuvent être envisagées sans pour autant sortir du cadre de l'invention.

Ainsi, si dans les exemples illustrés, les couches entre pièce finale et négatif sont de même nombre et même épaisseur, à l'exception de la pièce 21, on peut envisager qu'elles soient différentes.

Également, on peut très bien envisager un moule négatif avec des morceaux à plus de deux matériaux constitutifs.

### Liste des références citées

[1] Steve James, John Halchak, and Kevin Lunde, « A Sélective Net-Shape Powder Metal Process for High-Performance Rocket Engine Components », 11th international conférence on hot isostatic pressing, 9-13 juin 2014, stockholm, Suède.

## Revendications

1. Procédé de fabrication d'une pièce métallique (1) de forme complexe, comprenant les étapes suivantes :
i/ réalisation d'une ébauche de la pièce (1) ou de la forme souhaitée pour cette dernière selon une pluralité de morceaux (1.1 à 1.17) en un matériau métallique noble constitutif de la pièce à empiler les uns sur les autres;
ii/ réalisation d'un moule négatif (2) de l'ébauche de la pièce ou de sa forme souhaitée selon une pluralité de morceaux (2.1 à 2.17), les morceaux du moule négatif étant en un seul matériau ou en au moins deux matériaux, le seul ou l'un des deux étant apte à être éliminé par dissolution chimique à l'aide d'une solution sans effet sur les morceaux de l'ébauche ou de la forme souhaitée ;
iii/ réalisation d'un ensemble délimité par les morceaux métalliques de l'ébauche ou de la forme souhaitée empilés et emboîtés individuellement dans et/ou autour des morceaux empilés du moule négatif, les jeux d'empilements et d'emboîtement étant tels qu'ils puissent être éliminés dans la pièce par soudage-diffusion, le comportement moyen de dilatation thermique des morceaux du moule négatif empilés étant proche de ceux en matériau noble de l'ébauche ou de la forme souhaitée,
iv/ soudage de l'ensemble obtenu selon l'étape iii/ par soudage-diffusion,
v/ élimination du moule négatif dont une attaque chimique sélective, afin d'obtenir la pièce.

2. Procédé selon la revendication 1, les morceaux du moule négatif étant en un seul matériau dont le coefficient de dilatation moyen entre la température ambiante et la température de soudage est proche de celui du matériau noble des morceaux de l'ébauche ou de la forme souhaitée, de préférence avec une différence au plus entre 1 et 3 10⁻⁶K⁻¹.

3. Procédé selon la revendication 2, les morceaux de l'ébauche ou de la forme souhaitée étant en alliage austénitique inoxydable, acier, alliage de nickel, ou en alliage de titane tandis que ceux du moule négatif sont en alliage apte à être éliminé par dissolution chimique à l'aide d'une solution sans effet sur les morceaux de l'ébauche ou de la forme souhaitée.

4. Procédé selon la revendication 1, les morceaux du moule négatif étant en au moins deux matériaux, dont l'un est apte à être éliminé par dissolution chimique à l'aide d'une solution sans effet sur les morceaux de l'ébauche ou de la forme souhaitée, et l'autre est apte à être éliminé par une autre technique que la dissolution chimique, de préférence par extraction mécanique ou usinage, et choisis de telle sorte que le comportement en dilatation thermique du moule négatif entre la température ambiante et la température de soudage est proche de celui du matériau noble des morceaux de l'ébauche ou de la forme souhaitée.

5. Procédé selon l'une des revendications précédentes, l'étape iv/ étant réalisée par pressage uniaxial à chaud, les interfaces entre les morceaux empilés étant parallèles entre elles et perpendiculaires à la direction d'application de la force de soudage.

6. Procédé selon l'une des revendications 1 à 4, l'étape iv/ étant réalisée par compression isostatique à chaud, CIC.

7. Procédé selon la revendication 6, au moins une partie du conteneur mis en oeuvre pour la CIC formant une partie de la pièce obtenue à l'issue de l'étape v/.

8. Procédé selon l'une quelconque des revendications précédentes, comprenant, avant l'étape iii/, une étape de nettoyage des morceaux de l'ébauche ou de la forme souhaitée et de ceux du moule négatif.

9. Procédé selon l'une quelconque des revendications précédentes, comprenant, avant l'étape iii/, une étape d'application d'un anti diffusant sur tout ou partie des morceaux du moule négatif.

10. Procédé selon l'une quelconque des revendications précédentes, comprenant, après l'étape v/, une étape de traitement thermique de la pièce obtenue.

11. Procédé selon l'une quelconque des revendications précédentes, comprenant, après l'étape v/, une étape d'usinage de finition de la pièce obtenue.

12. Procédé selon l'une quelconque des revendications précédentes, les morceaux de l'ébauche ou de la pièce et de ceux du moule négatif étant des blocs, des plaques, des barres, des tubes, des lames extraites de tôles ou une combinaison de ceux-ci.

13. Procédé selon l'une quelconque des revendications précédentes, les morceaux de l'ébauche ou de la pièce et de ceux du moule négatif étant obtenus par usinage à partir de matière métallique, par découpe, par fabrication additive ou par une combinaison de ces techniques.

14. Application du procédé de fabrication selon l'une des revendications précédentes, pour réaliser des rouets de pompe, des moules de fabrication, des parties d'outils.

## Patentansprüche

1. Verfahren zur Fertigung eines metallischen Werkstücks (1) von komplexer Form, umfassend die folgenden Schritte:
i/ Ausführen eines Rohlings des Werkstücks (1) oder der gewünschten Form für Letzteres gemäß einer Vielzahl von Stücken (1.1 bis 1.17) aus einem edlen metallischen Werkstoffs, aus dem das Werkstück besteht, die übereinander zu stapeln sind;
ii/ Ausführen einer Negativform (2) des Rohlings des Werkstücks oder seiner gewünschten Form gemäß einer Vielzahl von Stücken (2.1 bis 2.17), wobei die Stücke der Negativform aus einem einzigen Werkstoff oder aus mindestens zwei Werkstoffen sind, wobei der einzige oder einer der beiden geeignet ist, durch chemisches Auflösen mithilfe einer Lösung, die auf die Stücke des Rohlings oder der gewünschten Form wirkungslos ist, beseitigt zu werden;
iii/ Ausführen einer Einheit, die durch die metallischen Stücke des Rohlings oder der gewünschten Form begrenzt wird, die in und/oder um gestapelte Stücke der Negativform individuell gestapelt und geschachtelt sind, wobei die Stapel- oder Schachtelspiele derart sind, dass sie in dem Werkstück durch Diffusionsschweißen beseitigt werden können, wobei das durchschnittliche Wärmedehnungsverhalten der gestapelten Stücke der Negativform ähnlich von denen aus edlem Werkstoff des Rohlings oder der gewünschten Form ist,
iv/ Schweißen der gemäß dem Schritt iii/ erhaltenen Einheit durch Diffusionsschweißen,
v/ Beseitigen der Negativform, darunter ein selektives chemisches Ätzen, um das Werkstück zu erhalten.

2. Verfahren nach Anspruch 1, wobei die Stücke der Negativform aus einem einzigen Werkstoff sind, dessen durchschnittlicher Dehnungskoeffizient zwischen der Umgebungstemperatur und der Schweißtemperatur ähnlich dem des edlen Werkstoffs der Stücke des Rohlings oder der gewünschten Form ist, bevorzugt mit einer Differenz von höchstens zwischen 1 und 3 10⁻⁶ K⁻¹.

3. Verfahren nach Anspruch 2, wobei die Stücke des Rohlings oder der gewünschten Form aus nichtrostender austenitischer Legierung, Stahl, Nickellegierung oder aus Titanlegierung sind, während diejenigen der Negativform aus einer Legierung sind, die geeignet ist, durch chemisches Auflösen mithilfe einer Lösung, die auf die Stücke des Rohlings oder der gewünschten Form wirkungslos ist, beseitigt zu werden.

4. Verfahren nach Anspruch 1, wobei die Stücke der Negativform aus mindestens zwei Werkstoffen sind, von denen der eine geeignet ist, durch chemisches Auflösen mithilfe einer Lösung, die auf die Stücke des Rohlings oder der gewünschten Form wirkungslos ist, beseitigt zu werden, und der andere geeignet ist, durch eine andere Technik als das chemische Auflösen beseitigt zu werden, bevorzugt durch mechanisches Extrahieren oder Bearbeitung, und die so gewählt sind, dass das Verhalten bei Wärmedehnung der Negativform zwischen der Umgebungstemperatur und der Schweißtemperatur nahe dem des edlen Werkstoffs der Stücke des Rohlings oder der gewünschten Form ist.

5. Verfahren nach einem der vorhergehenden Ansprüche, wobei der Schritt iv/ durch uniaxiales Heißpressen ausgeführt wird, wobei die Grenzflächen zwischen den gestapelten Stücken parallel zueinander und senkrecht zu der Ausübungsrichtung der Schweißkraft sind.

6. Verfahren nach einem der Ansprüche 1 bis 4, wobei der Schritt iv/ durch heißisostatisches Pressen, CIC, ausgeführt wird.

7. Verfahren nach Anspruch 6, wobei mindestens ein Teil des für das CIC eingesetzten Behälters einen Teil des nach dem Schritt v/ erhaltenen Werkstücks bildet.

8. Verfahren nach einem der vorhergehenden Ansprüche, umfassend, vor dem Schritt iii/, einen Schritt des Reinigens der Stücke des Rohlings oder der gewünschten Form und derjenigen der Negativform.

9. Verfahren nach einem der vorhergehenden Ansprüche, umfassend, vor dem Schritt iii/, einen Schritt des Aufbringens eines Antidiffusionsmittels auf alle oder einen Teil der Stücke der Negativform.

10. Verfahren nach einem der vorhergehenden Ansprüche, umfassend, nach dem Schritt v/, einen Schritt der Wärmebehandlung des erhaltenen Werkstücks.

11. Verfahren nach einem der vorhergehenden Ansprüche, umfassend, nach dem Schritt v/, einen Schritt der Endbearbeitung des erhaltenen Werkstücks.

12. Verfahren nach einem der vorhergehenden Ansprüche, wobei die Stücke des Rohlings oder des Werkstücks und derjenigen der Negativform Blöcke, Platten, Stäbe, Rohre, aus Blechen hervorgegangene Lamellen oder eine Kombination von diesen sind.

13. Verfahren nach einem der vorhergehenden Ansprüche, wobei die Stücke des Rohlings oder des Werkstücks und derjenigen der Negativform durch Bearbeitung aus metallischem Material, durch Stanzen, durch additive Fertigung oder durch eine Kombination dieser Techniken erhalten werden.

14. Anwenden des Fertigungsverfahrens nach einem der vorhergehenden Ansprüche, um Pumpenflügelräder, Fertigungsformen, Werkzeugteile auszuführen.

## Claims

1. Method for manufacturing a metal component (1) with a complex shape, comprising the following steps:
i/ producing a blank of the component (1) or of the shape desired for the latter in a plurality of pieces (1.1 to 1.17) made from a noble metal material constituting the component and intended to be stacked on top of one another;
ii/ producing a negative mould (2) of the blank of the component or of the desired shape thereof in a plurality of pieces (2.1 to 2.17), the pieces of the negative mould being made from a single material or from at least two materials, the single material or one of the two materials being able to be removed by chemical dissolution using a solution that does not affect the pieces of the blank or of the desired shape;
iii/ producing an assembly delimited by the metal pieces of the blank or of the desired shape stacked and nested individually in and/or around the stacked pieces of the negative mould, the sets of stacks and nested sets being such that they can be removed in the component by diffusion welding, the average thermal expansion behaviour of the stacked pieces of the negative mould being similar to those made from noble material of the blank or of the desired shape,
iv/ welding the assembly obtained in step iii/ by diffusion welding,
v/ removing the negative mould, including a selective chemical attack, in order to obtain the component.

2. Method according to Claim 1, the pieces of the negative mould being made from a single material having an average coefficient of expansion between the ambient temperature and the welding temperature that is similar to that of the noble material of the pieces of the blank or of the desired shape, preferably with a difference of at most between 1 and 3 10⁻⁶K⁻¹.

3. Method according to Claim 2, the pieces of the blank or of the desired shape being made from a stainless austenitic alloy, steel, nickel alloy, or from titanium alloy, whereas those of the negative mould are made from an alloy able to be removed by chemical dissolution using a solution that does not affect the pieces of the blank or of the desired shape.

4. Method according to Claim 1, the pieces of the negative mould being made from at least two materials, one of which is able to be removed by chemical dissolution using a solution that does not affect the pieces of the blank or of the desired shape, and the other is able to be removed by a technique other than chemical dissolution, preferably by mechanical extraction or machining, and chosen such that the thermal expansion behaviour of the negative mould between the ambient temperature and the welding temperature is similar to that of the noble material of the pieces of the blank or of the desired shape.

5. Method according to one of the preceding claims, step iv/ being realized by uniaxial hot pressing, the interfaces between the stacked pieces being parallel to one another and perpendicular to the direction of application of the welding force.

6. Method according to one of Claims 1 to 4, step iv/ being realized by hot isostatic pressing, HIP.

7. Method according to Claim 6, at least part of the container used for HIP forming part of the component obtained at the end of step v/.

8. Method according to any one of the preceding claims, comprising, before step iii/, a step of cleaning the pieces of the blank or of the desired shape and those of the negative mould.

9. Method according to any one of the preceding claims, comprising, before step iii/, a step of applying an anti-diffusion agent to all or some of the pieces of the negative mould.

10. Method according to any one of the preceding claims, comprising, after step v/, a step of heat treating the component obtained.

11. Method according to any one of the preceding claims, comprising, after step v/, a step of finishing machining the component obtained.

12. Method according to any one of the preceding claims, the pieces of the blank or of the component and of those of the negative mould being blocks, plates, bars, tubes, strips extracted from metal sheets or a combination thereof.

13. Method according to any one of the preceding claims, the pieces of the blank or of the component and of those of the negative mould being obtained by machining from metal material, by cutting, by additive manufacturing or by a combination of these techniques.

14. Application of the manufacturing method according to one of the preceding claims for producing pump impellers, manufacturing moulds, tool parts.
